# EUROPÄISCHE PATENTSCHRIFT

(11) **EP 2 626 936 B1**
(45) Veröffentlichungstag und Bekanntmachung des Hinweises auf die Patenterteilung: **09.01.2019**
(21) Anmeldenummer: 13153909.0
(22) Anmeldetag: 04.02.2013
(51) Int. Cl.: H01M 8/18, H01M 4/88, H01M 4/96

(54) **Aktivierung von Kohlenstoffelektroden mittels Plasmabehandlung**
Activation of carbon electrodes by means of plasma treatment
Activation d'électrodes de carbone au moyen d'un traitement plasma

(30) Priorität: 09.02.2012 DE 102012201942
(43) Veröffentlichungstag der Anmeldung: 14.08.2013
(73) Patentinhaber: EWE-Forschungszentrum Für Energietechnologie E.V., 26129 Oldenburg (DE)
(72) Erfinder: Komsiyska, Lidiya, 26121 Oldenburg (DE); Lenz, Bettina, 26131 Oldenburg (DE); Hammer, Eva-Maria, 26123 Oldenburg (DE); Meyer, Marco, 38550 Isenbüttel (DE)
(74) Vertreter: Lemcke, Brommer & Partner Patentanwälte Partnerschaft mbB

(56) Entgegenhaltungen:
- EP-A2- 1 059 685
- WO-A2-98/29358
- DE-A1- 19 536 574
- JP-A- S60 232 669
- MASASHI ISHIKAWA ET AL: "Effect of treatment of activated carbon fiber cloth electrodes with cold plasma upon performance of electric double-layer capacitors", JOURNAL OF POWER SOURCES, Bd. 60, Nr. 2, 2. Juni 1996 (1996-06-02), Seiten 233-238, XP055065591, ISSN: 0378-7753, DOI: 10.1016/S0378-7753(96)80016-4

## Beschreibung

Die vorliegende Erfindung betrifft die Verwendung eines aktivierten kohlenstoffhaltigen Materials als Elektrode in einer Redox-Flow-Zelle, ein Verfahren zur Herstellung einer zum Einsatz in einer Redox-Flow-Zelle geeigneten kohlenstoffhaltigen Elektrode auf Basis des aktivierten kohlenstoffhaltigen Materials sowie eine durch dieses Herstellungsverfahren erhaltene kohlenstoffhaltige Elektrode zum Einsatz in einer Redox-Flow-Zelle.

Eine Redox-Flow-Batterie ist ein elektrochemischer Durchflussreaktor mit in Serie verbundenen elektrochemischen Zellen. Die einzelnen Zellen bestehen üblicherweise aus zwei durch eine ionenleitende Membran voneinander getrennten Halbzellen. Die Halbzellen weisen jeweils eine Elektrode auf und werden von einer Elektrolyt-Lösung aus in einem Lösungsmittel gelösten Salzen durchströmt. Die Elektrolyt-Lösung für jede der beiden Halbzellen wird in Tanks gelagert und bei Bedarf einer zentralen Reaktionseinheit für den Lade- oder Entladeprozess mittels Pumpen zugeführt. Die Tankgröße bestimmt den Energieinhalt der Batterie, die Lade-/Entladeeinheit die Leistung der Batterie. Beim Lade- und Entladeprozess wird die Wertigkeit der Ionen des jeweiligen Salzes geändert. Dass Vanadium in vier verschiedenen Wertigkeiten vorliegen kann, macht die Vanadium-Redox-Flow-Batterie besonders interessant, weil dadurch in beiden Halbzellen Vanadium verwendet werden kann. Ein sogenanntes Crossover, also ein Übertritt von Elektrolyt über die Membran von einer Halbzelle in die andere, führt daher nicht zu Verunreinigung und verursacht keine Degradation der Elektroden. Zu den Vorteilen von Redox-Flow-Batterien zählen insbesondere hohe erzielbare Systemwirkungsgrade von über 75%, lange Lebensdauern aufgrund minimaler Selbstentladung, und die Möglichkeit des schnellen Wiederaufladens allein durch einen Austausch von verbrauchter Elektrolyt-Lösung. Somit eignet sich diese Batterietechnologie sehr gut für einen großtechnischen Einsatz und ist vor Allem bei Verwendung großer Tanks sehr effektiv.

Die Elektroden in den Halbzellen bestehen meistens aus Graphit bzw. aus kohlenstoffhaltigem Material, insbesondere aufgrund des dadurch gegebenen hohen elektrochemischen Spannungsfensters in wässrigen Lösungen. Für eine möglichst hohe spezifische Leistung werden als Elektrodenmaterial in der Regel Graphitfilze mit hoher spezifischer Oberfläche eingesetzt. Unbehandelte Graphit- und Kohlenstoff-Materialien sind hydrophob und in der Regel inaktiv; gewünschte Redoxreaktionen laufen üblicherweise nur mit sehr hohen Überspannungen ab. Es ist aber bekannt, dass Funktionalgruppen auf der Oberfläche die elektrokatalytische Aktivität dieser Materialien beeinflussen und dass insbesondere sauerstoffhaltige Funktionalgruppen als Aktivzentren für mehrere elektrochemische Reaktionen wirken, zudem erhöhen sie die Hydrophilie dieser Oberflächen. Beispielsweise wurde eine Aktivierung der Elektrodenoberflächen von Vanadium-Redox-Flow-Batterien durch oxydative chemische oder thermische Vorbehandlungen beschrieben. So können die Graphitmaterialien zur chemischen Vorbehandlung in konzentrierten Mineralsäuren oder Säuremischungen 5 bis 15 Stunden erhitzt werden (Sun et al., Electrochim. Acta 37 (1992), 2465). Als thermisches Verfahren wird das Erhitzen des Materials für 30 Stunden bei einer Temperatur von 400 °C in Luftatmosphäre vorgeschlagen (Sun et al., Electrochim. Acta 37 (1992), 1253). Mit diesen Verfahren können sauerstoffhaltige Funktionalgruppen wie Carbonyl, Chinon oder Phenol erzeugt werden. Beide Verfahren sind jedoch vergleichsweise zeitaufwändig und tragen zur Kostenerhöhung beim Produktionsprozess bei.

Des Weiteren ist bekannt, dass durch die Anwendung elektrischer Entladung chemische Reaktionen initiiert werden können. Derartige sowohl thermische als auch nichtthermische Plasmaverfahren finden eine breite Anwendung und mithilfe dieser Methoden sind auch Oberflächenmodifikationen und die Erzeugung sauerstoffhaltiger Verbindungen möglich. Ein prominentes Beispiel ist die Erzeugung von Ozon, das mit Kohlenwasserstoffen zu Ozoniden und anderen Carbonyl-Verbindungen, wie Aldehyden und Ketonen, reagieren kann, wie zum Beispiel in WO 2003/040027 beschrieben. Der Einsatz von Plasmabehandlungen zur Modifizierung von Polymeroberflächen kann zur Erhöhung der Hydrophilie und zur Verbesserung der Hafteigenschaften dieser Oberflächen führen, wie in US 6,372,192 und Han et al., IEEE Transaction on Industrial Application, 1A-11, (1975) 328 beschrieben, wobei zum Teil in sauerstofffreier Atmosphäre gearbeitet wird.

Der vorliegenden Erfindung lag die Aufgabe zugrunde, zum Einsatz in Redox-Flow-Batterien vorgesehene Graphit- und Kohlenstoff-haltige Materialien effizienter auszugestalten, wobei die Nachteile der im Stand der Technik zur Aktivierung dieser Materialien eingesetzten Verfahren weitgehend vermieden werden sollten, Insbesondere sollte ein alternativer Aktivierungsvorgang leicht in industrielle Fertigungsprozesse integrierbar sein.

Zur Lösung dieser Aufgabe wird vorgeschlagen, ein durch Plasmabehandlung in sauerstoffhaltiger Atmosphäre aktiviertes kohlenstoffhaltiges Material als Elektrode in einer Redox-Flow-Zelle zu verwenden.

Dementsprechend ist ein erster Gegenstand der vorliegenden Erfindung die Verwendung eines aktivierten kohlenstoffhaltigen Materials als Elektrode in einer Redox-Flow-Zelle, wobei ein kohlenstoffhaltiges Material zur Aktivierung im Rahmen einer Plasmabehandlung einer elektrischen Entladung in sauerstoffhaltiger Atmosphäre ausgesetzt wird, wodurch das aktivierte kohlenstoffhaltige Material erhalten wird.

Ein weiterer Gegenstand der vorliegenden Erfindung ist ein Verfahren zur Herstellung einer zum Einsatz in einer Redox-Flow-Zelle geeigneten kohlenstoffhaltigen Elektrode, wobei ein aktiviertes kohlenstoffhaltiges Material, wie hierin definiert, zur Ausbildung der kohlenstoffhaltigen Elektrode oder eines Bestandteils davon eingesetzt wird.

Noch ein weiterer Gegenstand der vorliegenden Erfindung ist eine kohlenstoffhaltige Elektrode, enthaltend ein aktiviertes kohlenstoffhaltiges Material, wie hierin definiert, zum Einsatz in einer Redox-Flow-Zelle, insbesondere in einer Vanadium-Redox-Flow-Zelle und speziell in einer Vanadium-Redox-Flow-Batterie, hergestellt durch ein erfindungsgemäßes Verfahren.

Unter einer Aktivierung des kohlenstoffhaltigen Materials im Sinne der vorliegenden Erfindung ist insbesondere eine elektrokatalytische Aktivierung und speziell eine Oxidation der Oberfläche des kohlenstoffhaltigen Materials zu verstehen. Hierdurch können elektrochemische Prozesse, insbesondere Redoxreaktionen, leichter bzw. effizienter ablaufen. Derartige elektrochemische Prozesse werden in der Regel durch Aktivzentren auf den Oberflächen des kohlenstoffhaltigen Materials beeinflusst, wobei die Aktivzentren als katalytisch aktive Zentren wirken. Allgemein führt die erfindungsgemäße Aktivierung des kohlenstoffhaltigen Materials mittels Plasmabehandlung zu einer Erhöhung der Aktivzentren auf der Oberfläche des kohlenstoffhaltigen Materials im Vergleich zum nicht aktivierten Material.

Die Aktivierung des kohlenstoffhaltigen Materials kann insbesondere eine Oberflächenmodifikation, speziell eine Hydrophilisierung, des kohlenstoffhaltigen Materials umfassen. Hierdurch wird die Anzahl sauerstoffhaltiger Funktionalgruppen auf der Oberfläche des kohlenstoffhaltigen Materials im Vergleich zum nicht aktivierten Material erhöht, zum Beispiel um einen Faktor von mindestens 2, mindestens 5 oder mindestens 10. Die sauerstoffhaltigen Funktionalgruppen umfassen vorzugsweise mindestens eine unter Hydroxyl, Carbonyl und Carboxyl ausgewählte Funktionalgruppe.

Die Aktivierung des kohlenstoffhaltigen Materials kann alternativ oder zusätzlich eine Erniedrigung der Überspannung mindestens einer Redox-Reaktion, die in der Redox-Flow-Zelle stattfindet, bewirken, zum Beispiel eine Erniedrigung um mindestens 100 mV, bezogen auf den entsprechend gemessenen Wert der Überspannung bei Verwendung des nicht aktivierten kohlenstoffhaltigen Materials. In diesem Zusammenhang kann die Aktivierung insbesondere mittels Zyclovoltammetrie ermittelt werden.

Die Aktivierung des kohlenstoffhaltigen Materials kann alternativ oder zusätzlich eine Verbesserung der Reversibilität mindestens einer Redox-Reaktion, die in der Redox-Flow-Zelle stattfindet, bewirken. In diesem Zusammenhang kann die Aufnahme eines Zyclovoltammogramms Aufschlüsse über die Reversibilität der betrachteten Redoxprozesse geben: Üblicherweise prägen sich bei gut reversiblen Redoxreaktionen sowohl für den oxidativen Reaktionsteil als auch für den reduktiven Reaktionsteil entsprechende Peaks im Zyclovoltammogramm aus. Bei besonders guter Reversibilität sollten die Flächenintegrale unter den aufgenommenen Kurven im Zyclovoltammogramm für den oxidativen und für den reduktiven Reaktionsteil einander weitgehend ähnlich sein.

Da die plasmabehandelten kohlenstoffhaltigen Materialien üblicherweise weitgehend oxidiert sind, treten bei ihrer Verwendung in der Regel keine irreversiblen Nebenrektionen auf. Die Aktivierung mittels Plasmabehandlung führt somit insbesondere dazu, dass eine unkontrollierte Oxidation dieser Materialien im Batteriebetrieb vermieden werden kann.

Das zur erfindungsgemäßen Aktivierung vorgesehene kohlenstoffhaltige Material ist zunächst unbehandelt, worunter zu verstehen ist, dass zumindest kein Aktivierungsschritt unter Einsatz eines Plasmaverfahrens erfolgt ist. Für eine verbesserte Gesamteffizienz ist es vorteilhaft, wenn vor der Plasmabehandlung zudem möglichst wenige oder keine Aufbereitungsschritte an dem kohlenstoffhaltigen Material vorgenommen werden. Insbesondere sind vorteilhafterweise keine zusätzlichen Aktivierungsschritte erforderlich, wobei der Begriff "Aktivierung" wie vorstehend erläutert zu verstehen ist. Bevorzugt stellt die Plasmabehandlung den einzigen Aktivierungsschritt für das kohlenstoffhaltige Material dar.

Bei dem kohlenstoffhaltigen Material kann es sich um Graphit, insbesondere Naturgraphit, synthetischen Graphit und/oder graphithaltige Materialien, handeln. Dieser Graphit kann vor dem erfindungsgemäßen Einsatz in einem Plasmaverfahren gegebenenfalls einem oder mehreren Aufbereitungsschritten, insbesondere einer Reinigung, unterzogen werden. Ebenfalls geeignet sind synthetische Kohlenstoffmaterialien, beispielsweise Polymere auf der Basis von Kohlenstoff oder synthetische Graphite.

Aufgrund der an der Oberfläche lokalisierten Aktivzentren werden vorteilhaft solche kohlenstoffhaltigen Materialien eingesetzt, die eine große spezifische Oberfläche aufweisen, zum Beispiel im Bereich von 0,1 bis 100 m²/g und insbesondere mindestens 1 m²/g (üblicherweise bestimmt mit der sogenannten BET-Methode). Insbesondere können kohlenstoffhaltige Materialien verwendet werden, die eine Faserstruktur besitzen, speziell in Form einer oder mehrerer Platten, Gewebe, Vliese und/oder Filze.

Zum Einsatz für die vorliegende Erfindung geeignete kohlenstoffhaltige Materialien weisen üblicherweise einen Kohlenstoffgehalt von mindestens 80 Gew.-%, zum Beispiel im Bereich von 95 bis 99,5 Gew.-%; und insbesondere von mindestens 90 Gew.-%, zum Beispiel im Bereich von 95 bis 99 Gew.-%, auf, jeweils bezogen auf das Gesamtgewicht.

In einer bevorzugten Ausführungsform werden Graphitfilze mit einem Kohlenstoffgehalt von mindestens 98 Gew.-%, besonders bevorzugt mindestens 99 Gew.-%, und ganz besonders bevorzugt mindestens 99,5 Gew.-%, jeweils bezogen auf das Gesamtgewicht, eingesetzt. Besonders geeignet sind beispielsweise Graphitfilze der Fa. SGL Carbon, die unter dem Namen SIGRACELL® vertrieben werden.

In der Redox-Flow-Zelle wird üblicherweise ein Redoxsystem verwendet, welches eines oder zwei der folgenden Elemente aufweist: Vanadium, Brom, Eisen, Chrom, Zink, Cer, Schwefel, Mangan, Nickel, Titan. Geeignet sind insbesondere Redoxpaare aus Zn/Br, Zn/Ce, Fe/Cr, V/V, V/Br und BR/S.

In einer bevorzugten Ausführungsform ist die Redox-Flow-Zelle Bestandteil einer Vanadium-Redox-Flow-Batterie. Das in einer solchen Vanadium-Redox-Flow-Batterie genutzte Redoxpaar ist V/V, d.h. für die Elektrolytlösung wird dasselbe Element sowohl in der kathodischen Halbzelle als auch in der anodischen Halbzelle verwendet. Die Elektrolytlösungen bestehen im Wesentlichen aus verdünnter Schwefelsäure mit gelösten Vanadiumsalzen in verschiedenen Oxidationsstufen. An den Elektroden laufen hierbei folgende Reaktionen ab:
An der positiven Elektrode: VO₂⁺ + 2H⁺ + e⁻ = VO²⁺ + H₂O
An der negativen Elektrode: V²⁺ = V³⁺ + e⁻
Summenreaktion: VO₂⁺ + 2H⁺ + V²⁺ = VO²⁺ + H₂O + V³⁺

Für die Zwecke der vorliegenden Erfindung können grundsätzlich bekannte Plasmaverfahren zur Behandlung von kohlenstoffhaltigen Materialien angewendet werden. So kann die Plasmabehandlung ein nichtthermisches Plasmaverfahren, insbesondere eine Glimmentladung, eine Hochfrequenzentladung, eine Coronaentladung oder eine Mikrowellenentladung; oder ein thermisches Plasmaverfahren, insbesondere ein RF-Induktionsplasma, einen Plasmastrahl oder einen Lichtbogen; und vorzugsweise eine dielektrische Barriereentladung umfassen. Die Plasmabehandlung von Materialien mit Hilfe einer dielektrisch behinderten Entladung in der umgebenden Luft oder in anderen Gasen und in Gasmischungen bei Atmosphärendruck bietet eine einfache und effektive Methode zur Veränderung der Materialoberflächen.

Im Rahmen der vorliegenden Erfindung wurde gefunden, dass die Konzentration von Aktivzentren auf der Oberfläche von kohlenstoffhaltigen Materialien durch Variationen bei der Plasmabehandlung beeinflusst werden können. So haben insbesondere die Expositionszeit, die Plasmastärke und der eingestellte Luft- bzw. Gasstrom in diesem Zusammenhang eine signifikante Bedeutung.

Als Arbeitsgas für die Plasmabehandlung können für die Zwecke der vorliegenden Erfindung beispielsweise Luft, Stickstoff, Argon, Kohlenstoffmonoxid, Kohlenstoffdioxid und/oder Helium sowie Mischungen davon eingesetzt werden. Bei Verwendung von inerten Gasen wie Stickstoff und/oder Edelgasen wird dem Arbeitsgas üblicherweise jeweils ein bestimmter Anteil an Sauerstoff beigemischt, beispielsweise im Bereich von 1 bis 40 Vol.-% und insbesondere im Bereich von 20 bis 30 Vol.-%, jeweils bezogen auf das Gesamtvolumen des Arbeitsgases.

In einer bevorzugten Ausführungsform umfasst die Plasmabehandlung eine dielektrisch behinderte Barriereentladung und das Arbeitsgas weist einen Sauerstoffgehalt im Bereich von 15 bis 25 Vol.-%, bezogen auf das Gesamtvolumen des Arbeitsgases, auf.

In der Regel wird man die Plasmabehandlung in einem Druckbereich des Arbeitsgases von 1 bis 500 kPa und insbesondere im Bereich von 30 bis 100 kPa, zum Beispiel bei 50 kPa, durchführen.

In der Regel wird man die Plasmabehandlung mit einer Plasmaquelle durchführen, die mit einer Spannung im Bereich von 1 bis 50 kV und insbesondere im Bereich von 10 bis 15 kV betrieben wird. Geeignete Plasmaquellen, insbesondere für die dielektrische Barriereentladung, können strukturell beispielsweise aus parallelen Platten aufgebaut sein, ein Drahtgeflecht über dem Dielektrikum besitzen oder als Spitze zur Platte ausgestaltet sein.

Übliche Expositionszeiten bei der Plasmabehandlung der kohlenstoffhaltigen Materialien liegen im Bereich von 1 bis 600 s und insbesondere im Bereich von 10 bis 90 s, zum Beispiel bei 30 s.

In der Praxis werden üblicherweise mehrere Redox-Flow-Zellen in Serie oder parallel miteinander verbunden, um die gewünschte Spannung oder Stromstärke erzielen zu können. Der prinzipielle Aufbau sowie die Konstruktion von Redox-Flow-Zellen und Redox-Flow-Batterien ist dem Fachmann hinreichend bekannt.

Zur Charakterisierung von der Elektrolyt/Elektroden- Grenzfläche und insbesondere von elektrochemischen Redoxreaktionen, wie sie in Redox-Flow-Zellen stattfinden, hat sich die Zyclovoltammetrie erwiesen. Diese Standard-Labormethode ist dem Fachmann geläufig. Eine Übersicht zu den Grundlagen und Anwendungsmöglichkeiten der Zyclovoltammetrie findet sich in J. Heinze, Angew. Chem. 96 (1984), 823-840; siehe außerdem z.B. Hamann, C. H., Vielstich, W., Elektrochemie, 4. Auflage, Wiley-VCH, Weinheim 2005; sowie speziell zu Vanadium-Redox-Flow-Batterien: Wen et al., Acta Phys.-Chim. Sin., 2006, 22(4), 403-408; Zhu et al., Journal of Power Sources, Volume 184, Issue 2, 637.

### Beispiel

Graphitfilze GFD der Fa. SGL Carbon wurden zur Aktivierung einer Oberflächenbehandlung durch ein Plasmaverfahren unterzogen. Die Graphitfilze wiesen eine Ausdehnung von etwa 1 cm² und eine Dichte von 0,1 g/cm³ auf. Der Kohlenstoffgehalt dieser Graphitfilze lag bei mehr als 98%.

Es wurde eine dielektrisch behinderte kaltentladene Plasmaquelle eingesetzt (15 kV; Modell Plasma Laborstation der Fa. N.transfer GmbH). Als Arbeitsgas wurde Druckluft mit verschiedenen Drücken verwendet, nämlich etwa 30, 50 und 100 kPa. Unter diesen Bedingungen findet eine Oxidation der Graphitoberflächen statt. Die Experimente wurden bei Raumtemperatur (21°C) durchgeführt. Die Expositionszeiten lagen zwischen 10 und 60 Sekunden. Der Filz wurde jeweils unter dem Plasmawerkzeug in einem Abstand von 2-3 mm fixiert. Bei dem verwendeten Plasmawerkzeug handelt es sich um eine Flächenelektrode. Die Plasmafrequenz der Elektrode ist zwischen 1 und 1,3 kHz einstellbar. Die Filze wurden bei den durchgeführten Experimenten mit einer maximalen Frequenz von 1,3 kHz und einer maximalen Spannung von 15 kV behandelt.

Zur Charakterisierung der elektrokatalytischen Aktivität der Graphitfilze wurden diese vor und nach der Plasmabehandlung mittels Zyclovoltammetrie in einer elektrochemischen Dreielektrodenzelle untersucht. Hierzu wurden die Graphitfilze als Arbeitselektroden jeweils in eine verdünnte Vanadylsulfatlösung gegeben (10 mM VOSO₄ + 0,1 M H₂SO₄; 97% VOSO₄ der Fa. Sigma Aldrich). Als Referenzelektrode wurde eine kommerzielle Ag/AgCl Elektrode der Fa. Schott und als Gegenelektrode ein Platingitter der Fa. Heareus verwendet. Die elektrochemischen Messungen wurden mittels einem Potentiostat/Galvanostat Modulab, Fa. Solatron Analytics, bei Zimmertemperatur (21°C) durchgeführt. Als Anfangspotential wurde die Ruheklemmspannung ausgewählt (für unbehandelten Filz 0,31 V, für behandelten 0,4 V, jeweils vs Ag/AgCl). Die Arbeitselektroden wurden in anodische Richtung bis 1,0 V und anschließend kathodisch bis -0,2 V, mit einer Vorschubgeschwindigkeit von 5 mV/s, polarisiert.

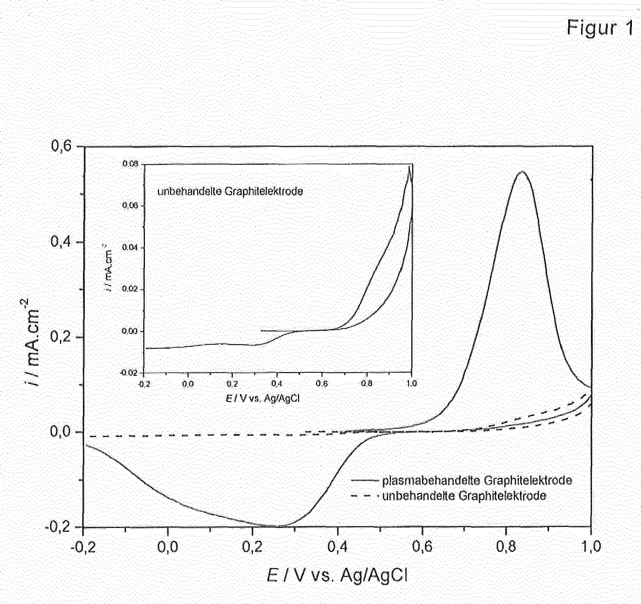

In Fig. 1 ist jeweils ein Zyclovoltammogramm, aufgenommen mit einem nicht plasmabehandelten Graphitfilz (gestrichelte Kurve) bzw. mit einem plasmabehandelten Graphitfilz (durchgezogene Kurve; Plasmabehandlung mit 15 kV bei ca. 50 kPa), dargestellt, um das elektrochemische Verhalten miteinander zu vergleichen (10 mM VOSO₄ + 0,1 M H₂SO₄; dE/dt = 5 mV/s). Aufgetragen ist die Stromdichte gegen die eingestellten Spannungswerte, wobei Silber/Silberchlorid als Referenzelektrode gewählt wurde.

Aus Fig. 1 ist ersichtlich, dass die Überspannung der Redoxreaktion (VO²⁺ / VO₂⁺) auf der plasmabehandelten Filzoberfläche im Vergleich zum unbehandelten Filz deutlich erniedrigt ist, was insbesondere an der Verschiebung des beobachteten anodischen Peakpotenzials erkennbar ist, siehe Inset Graphik). Darüber hinaus ist die Reversibilität der untersuchten Redoxreaktion durch die Plasmabehandlung erheblich verbessert worden, was insbesondere an der deutlichen Ausprägung eines kathodischen Peak erkennbar ist. Aus den Zyclovoltammogrammen lassen sich die jeweiligen Ladungsmengen für die anodische bzw. kathodische Ladung durch einfache Integralberechnung aus der Strom/Zeit-Kurve berechnen: So ist bei der unbehandelten Graphitelektrode die anodische Ladung (3,1 mC/cm²) aufgrund der Überlappung der gewünschten Vanadium-Redoxreaktion und der irreversiblen Elektrodenoxidation fast 4 mal höher als die kathodische Ladung (0,8 mC/cm²). Bei der plasmabehandelten Graphitelektrode ist der Ladungsunterschied hingegen durch einen Faktor von nur etwa 1,2 ausgeprägt (anodisch 21 mC/cm², kathodisch 17 mC/cm²).

Es ist zu erwarten, dass die Senkung der Überspannung der Redoxreaktion (VO²⁺ / VO₂⁺) auf der plasmabehandelten Filzoberfläche zur Erhöhung der Spannungseffizienz einer Vanadium-Redox-Flow-Zelle bzw. einer aus solchen Zellen aufgebauten Batterie beiträgt. Die berechneten Ladungsmengen weisen auch darauf hin, dass der plasmabehandelte Graphitfilz eine deutlich höhere Leistung liefern wird. Somit implizieren die hier gezeigten Ergebnisse, dass eine (dielektrisch behinderte) Plasmabehandlung erfolgreich zur elektrokatalytischen Aktivierung von kohlenstoffhaltigen Elektroden für Redox-Flow-Zellen bzw. - batterien eingesetzt werden kann.

## Patentansprüche

1. Verwendung eines aktivierten kohlenstoffhaltigen Materials als Elektrode in einer Redox-Flow-Zelle, **dadurch gekennzeichnet, dass** als aktiviertes kohlenstoffhaltiges Material ein kohlenstoffhaltiges Material eingesetzt wird, das durch Plasmabehandlung, bei der es einer elektrischen Entladung in sauerstoffhaltiger Atmosphäre in einem Druckbereich eines Arbeitsgases von 30 bis 100 kPa ausgesetzt wurde, aktiviert wurde.

2. Verwendung nach Anspruch 1, **dadurch gekennzeichnet, dass** als aktiviertes kohlenstoffhaltiges Material ein kohlenstoffhaltiges Material eingesetzt wird, dessen Aktivierung eine Oberflächenmodifikation, insbesondere eine Hydrophilisierung, des kohlenstoffhaltigen Materials umfasst, wodurch die Anzahl sauerstoffhaltiger Funktionalgruppen auf der Oberfläche des kohlenstoffhaltigen Materials erhöht wurde, wobei die sauerstoffhaltigen Funktionalgruppen vorzugsweise mindestens eine unter Hydroxyl, Carbonyl und Carboxyl ausgewählte Funktionalgruppe umfassen.

3. Verwendung nach einem der vorhergehenden Ansprüche, **dadurch gekennzeichnet, dass** als aktiviertes kohlenstoffhaltiges Material ein kohlenstoffhaltiges Material eingesetzt wird, dessen Aktivierung eine Erniedrigung einer Überspannung mindestens einer Redox-Reaktion, die in der Redox-Flow-Zelle stattfindet, bewirkte.

4. Verwendung nach einem der vorhergehenden Ansprüche, **dadurch gekennzeichnet, dass** als aktiviertes kohlenstoffhaltiges Material ein kohlenstoffhaltiges Material eingesetzt wird, dessen Aktivierung eine Verbesserung einer Reversibilität mindestens einer Redox-Reaktion, die in der Redox-Flow-Zelle stattfindet, bewirkte.

5. Verwendung nach einem der vorhergehenden Ansprüche, **dadurch gekennzeichnet, dass** als aktiviertes kohlenstoffhaltiges Material durch Plasmabehandlung aktiviertes gegebenenfalls aufbereitetes Graphit oder aktivierte synthetische Kohlenstoffmaterialien eingesetzt wird/werden, und/oder ein durch Plasmabehandlung eines kohlenstoffhaltigen Materials mit einem Kohlenstoffgehalt von mindestens 80 Gew.-%, bezogen auf das Gesamtgewicht des kohlenstoffhaltigen Materials, aktiviertes kohlenstoffhaltiges Material eingesetzt wird, und/oder ein durch Plasmabehandlung eines kohlenstoffhaltigen Materials in Form einer Faserstruktur, insbesondere in Form einer oder mehrerer Platten, Gewebe, Vliese und/oder Filze, aktiviertes kohlenstoffhaltiges Material eingesetzt wird.

6. Verwendung nach einem der vorhergehenden Ansprüche, wobei in der Redox-Flow-Zelle ein Redoxsystem verwendet wird, welches eines oder zwei der folgenden Elemente aufweist: Vanadium, Brom, Eisen, Chrom, Zink, Cer, Schwefel, Mangan, Nickel, Titan.

7. Verwendung nach einem der vorhergehenden Ansprüche, **dadurch gekennzeichnet, dass** das aktivierte kohlenstoffhaltige Material als Elektrode in einer Vanadium-Redox-Flow-Zelle eingesetzt wird und insbesondere in einer Vanadium-Redox-Flow-Zelle als Bestandteil einer Vanadium-Redox-Flow-Batterie eingesetzt wird.

8. Verwendung nach einem der vorhergehenden Ansprüche, **dadurch gekennzeichnet, dass** als aktiviertes kohlenstoffhaltiges Material ein kohlenstoffhaltiges Material eingesetzt wird, das durch Plasmabehandlung, die ein nichtthermisches Plasmaverfahren, insbesondere eine Glimmentladung, eine Hochfrequenzentladung, eine Coronaentladung oder eine Mikrowellenentladung; oder ein thermisches Plasmaverfahren, insbesondere ein RF-Induktionsplasma, einen Plasmastrahl oder einen Lichtbogen; und vorzugsweise eine dielektrische Barriereentladung umfasst, aktiviert wurde.

9. Verwendung nach einem der vorhergehenden Ansprüche, **dadurch gekennzeichnet, dass** als aktiviertes kohlenstoffhaltiges Material ein kohlenstoffhaltiges Material eingesetzt wird, das durch Plasmabehandlung, die mit einem Arbeitsgas durchgeführt wurde, das einen Sauerstoffgehalt im Bereich von 1 bis 40 Vol.-%, bezogen auf das Gesamtvolumen des Arbeitsgases, aufwies, aktiviert wurde.

10. Verwendung nach einem der vorhergehenden Ansprüche, **dadurch gekennzeichnet, dass** als aktiviertes kohlenstoffhaltiges Material ein kohlenstoffhaltiges Material eingesetzt wird, das durch Plasmabehandlung, die mit einer Plasmaquelle durchgeführt wurde, die mit einer Spannung im Bereich von 1 bis 50 kV betrieben wurde, aktiviert wurde.

11. Verwendung nach einem der vorhergehenden Ansprüche, **dadurch gekennzeichnet, dass** als aktiviertes kohlenstoffhaltiges Material ein kohlenstoffhaltiges Material eingesetzt wird, das durch Plasmabehandlung, die mit einer Expositionszeit im Bereich von 1 bis 600 s durchgeführt wurde, aktiviert wurde.

12. Verfahren zur Herstellung einer zum Einsatz in einer Redox-Flow-Zelle geeigneten kohlenstoffhaltigen Elektrode, **dadurch gekennzeichnet, dass** ein kohlenstoffhaltiges Material durch Plasmabehandlung, bei der es einer elektrischen Entladung in sauerstoffhaltiger Atmosphäre in einem Druckbereich eines Arbeitsgases von 30 bis 100 kPa ausgesetzt wird, aktiviert wird und das so aktivierte kohlenstoffhaltige Material zur Ausbildung der kohlenstoffhaltigen Elektrode oder eines Bestandteils davon eingesetzt wird.

13. Graphithaltige Elektrode, enthaltend ein durch Plasmabehandlung, bei der es einer elektrischen Entladung in sauerstoffhaltiger Atmosphäre in einem Druckbereich eines Arbeitsgases von 30 bis 100 kPa ausgesetzt wurde, aktiviertes kohlenstoffhaltiges Material, zum Einsatz in einer Redox-Flow-Zelle, insbesondere in einer Vanadium-Redox-Flow-Zelle und speziell in einer Vanadium-Redox-Flow-Batterie, hergestellt durch ein Verfahren nach Anspruch 12.

## Claims

1. Use of an activated carbon-containing material as an electrode in a redox flow cell, **characterised in that** as activated carbon-containing material there is used a carbon-containing material that has been activated by plasma treatment in which it has been exposed to an electrical discharge in an oxygen-containing atmosphere in a pressure range of a working gas of from 30 to 100 kPa.

2. Use according to claim 1, **characterised in that** as activated carbon-containing material there is used a carbon-containing material the activation of which includes a surface-modification, especially a hydrophilisation, of the carbon-containing material, with the result that the number of oxygen-containing functional groups on the surface of the carbon-containing material has been increased, wherein the oxygen-containing functional groups preferably comprise at least one functional group selected from hydroxyl, carbonyl and carboxyl.

3. Use according to either one of the preceding claims, **characterised in that** as activated carbon-containing material there is used a carbon-containing material the activation of which effected a lowering of an overpotential of at least one redox reaction taking place in the redox flow cell.

4. Use according to any one of the preceding claims, **characterised in that** as activated carbon-containing material there is used a carbon-containing material the activation of which effected an improvement in a reversibility of at least one redox reaction taking place in the redox flow cell.

5. Use according to any one of the preceding claims, **characterised in that** as activated carbon-containing material there is/are used optionally pre-prepared graphite activated by plasma treatment or synthetic carbon materials activated by plasma treatment, and/or there is used a carbon-containing material activated by plasma treatment of a carbon-containing material having a carbon content of at least 80 % by weight, based on the total weight of the carbon-containing material, and/or there is used a carbon-containing material activated by plasma treatment of a carbon-containing material in the form of a fibre structure, especially in the form of one or more sheets, woven fabrics, non-woven fabrics and/or felts.

6. Use according to any one of the preceding claims, wherein in the redox flow cell there is used a redox system which has one or two of the following elements: vanadium, bromine, iron, chromium, zinc, cerium, sulphur, manganese, nickel, titanium.

7. Use according to any one of the preceding claims, **characterised in that** the activated carbon-containing material is used as an electrode in a vanadium redox flow cell and is especially used in a vanadium redox flow cell as a component of a vanadium redox flow battery.

8. Use according to any one of the preceding claims, **characterised in that** as activated carbon-containing material there is used a carbon-containing material that has been activated by plasma treatment which includes a non-thermal plasma process, especially a glow discharge, a high-frequency discharge, a corona discharge or a microwave discharge; or a thermal plasma process, especially an RF induction plasma, a plasma jet or a light arc; and preferably a dielectric barrier discharge.

9. Use according to any one of the preceding claims, **characterised in that** as activated carbon-containing material there is used a carbon-containing material that has been activated by plasma treatment carried out with a working gas having an oxygen content in the range of from 1 to 40 % by volume, based on the total volume of the working gas.

10. Use according to any one of the preceding claims, **characterised in that** as activated carbon-containing material there is used a carbon-containing material that has been activated by plasma treatment carried out with a plasma source operated at a voltage in the range of from 1 to 50 kV.

11. Use according to any one of the preceding claims, **characterised in that** as activated carbon-containing material there is used a carbon-containing material that has been activated by plasma treatment carried out with an exposure time in the range of from 1 to 600 s.

12. Method of producing a carbon-containing electrode suitable for use in a redox flow cell, **characterised in that** a carbon-containing material is activated by plasma treatment in which it is exposed to an electrical discharge in an oxygen-containing atmosphere in a pressure range of a working gas of from 30 to 100 kPa, and the carbon-containing material so activated is used to form the carbon-containing electrode or a component thereof.

13. A graphite-containing electrode, containing a carbon-containing material activated by plasma treatment in which it has been exposed to an electrical discharge in an oxygen-containing atmosphere in a pressure range of a working gas of from 30 to 100 kPa, for use in a redox flow cell, especially in a vanadium redox flow cell and more especially in a vanadium redox flow battery, produced by a method according to claim 12.

## Revendications

1. Utilisation d'un matériau carboné activé comme électrode dans une cellule à flux rédox, **caractérisée en ce que** le matériau carboné activé qui est utilisé est un matériau carboné, qui a été activé au moyen d'un traitement au plasma, lors duquel il a été exposé à une décharge électrique dans une atmosphère contenant de l'oxygène dans une plage de pression d'un gaz de travail de 30 kPa à 100 kPa.

2. Utilisation selon la revendication 1, **caractérisée en ce que** le matériau carboné activé qui est utilisé est un matériau carboné dont l'activation comprend une modification de surface, en particulier une hydrophilisation, du matériau carboné, grâce à laquelle le nombre de groupements fonctionnels contenant de l'oxygène sur la surface du matériau carboné augmente, où les groupements fonctionnels contenant de l'oxygène comprennent de préférence au moins un groupement fonctionnel sélectionné parmi un hydroxyle, un carbonyle et un carboxyle.

3. Utilisation selon l'une des revendications précédentes, **caractérisée en ce que** le matériau carboné activé qui est utilisé est un matériau carboné dont l'activation conduit à une réduction de l'excédent de potentiel d'au moins une réaction rédox qui a lieu dans la cellule à flux rédox.

4. Utilisation selon l'une des revendications précédentes, **caractérisée en ce que** le matériau carboné activé qui est utilisé est un matériau carboné dont l'activation conduit à une amélioration de la réversibilité d'au moins une réaction rédox qui a lieu dans la cellule à flux rédox.

5. Utilisation selon l'une des revendications précédentes, **caractérisée en ce que** le matériau carboné activé qui est utilisé est du graphite éventuellement traité activé par traitement au plasma ou des matériaux carbonés synthétiques activés par traitement au plasma, et/ou un matériau carboné activé obtenu par traitement au plasma d'un matériau carboné ayant une teneur en carbone d'au moins 80 % en poids sur la base du poids total du matériau carboné, et/ou un matériau carboné activé obtenu par traitement au plasma d'un matériau carboné sous la forme d'une structure fibreuse, en particulier sous la forme d'un ou de plusieurs feuillets, tissus, non-tissés et/ou feutres.

6. Utilisation selon l'une des revendications précédentes, où il est utilisé dans la cellule à flux rédox un système rédox qui comporte un ou deux des éléments suivants : vanadium, brome, fer, chrome, zinc, cérium, soufre, manganèse, nickel, titane.

7. Utilisation selon l'une des revendications précédentes, **caractérisée en ce que** le matériau carboné activé est utilisé comme électrode dans une cellule à flux rédox au vanadium et est utilisé en particulier dans une cellule à flux rédox au vanadium faisant partie d'une batterie à flux rédox au vanadium.

8. Utilisation selon l'une des revendications précédentes, **caractérisée en ce que** le matériau carboné activé qui est utilisé est un matériau carboné qui a été activé par traitement au plasma, lequel comprend un procédé au plasma non thermique, en particulier une décharge luminescente, une décharge haute fréquence, une décharge corona ou une décharge micro-onde ; ou un procédé au plasma thermique, en particulier un plasma par induction RF, un faisceau de plasma ou un arc électrique ; et de préférence une décharge à barrière diélectrique.

9. Utilisation selon l'une des revendications précédentes, **caractérisée en ce que** le matériau carboné activé qui est utilisé est un matériau carboné qui a été activé par traitement au plasma, lequel a été réalisé avec un gaz de travail qui présentait une teneur en oxygène dans la plage de 1 % à 40 % en volume sur la base du volume total du gaz de travail.

10. Utilisation selon l'une des revendications précédentes, **caractérisée en ce que** le matériau carboné activé qui est utilisé est un matériau carboné qui a été activé par traitement au plasma, lequel a été réalisé avec une source de plasma qui était alimentée par une tension de l'ordre de 1 kV à 50 kV.

11. Utilisation selon l'une des revendications précédentes, **caractérisée en ce que** le matériau carboné activé qui est utilisé est un matériau carboné qui a été activé par traitement au plasma, lequel a été réalisé avec un temps d'exposition dans la plage de 1 s à 600 s.

12. Procédé de fabrication d'une électrode carbonée pouvant être utilisée dans une cellule à flux rédox, **caractérisé en ce qu'**un matériau carboné est activé par traitement au plasma, lors duquel il est exposé à une décharge électrique dans une atmosphère contenant de l'oxygène dans une plage de pression d'un gaz de travail de 30 kPa à 100 kPa et le matériau carboné ainsi activé est utilisé pour former l'électrode carbonée ou l'un de ses composants.

13. Electrode contenant du graphite, contenant un matériau carboné qui a été activé par traitement au plasma, lors duquel il a été exposé à une décharge électrique dans une atmosphère contenant de l'oxygène dans une plage de pression d'un gaz de travail de 30 kPa à 100 kPa, destinée à être utilisée dans une cellule à flux rédox, en particulier dans une cellule à flux rédox au vanadium et plus particulièrement dans une batterie à flux rédox au vanadium, fabriquée par un procédé selon la revendication 12.
